(19) Europäisches Patentamt
European Patent Office
Office européen des brevets

(11) **EP 3 842 295 B1**

(12) **EUROPEAN PATENT SPECIFICATION**

(45) Date of publication and mention
of the grant of the patent:
**26.10.2022 Bulletin 2022/43**

(21) Application number: **19383199.7**

(22) Date of filing: **26.12.2019**

(51) International Patent Classification (IPC):
**B60R 21/13** (2006.01)    **B62D 23/00** (2006.01)
**B62D 27/02** (2006.01)

(52) Cooperative Patent Classification (CPC):
**B60R 21/13; B62D 27/023; B62D 31/02;**
B60R 2021/137

(54) **ROLLOVER SAFETY RING FOR VEHICLES**

ÜBERROLLSCHUTZRING FÜR FAHRZEUGE

BAGUE DE SÉCURITÉ ANTIRETOURNEMENT POUR VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.06.2021 Bulletin 2021/26**

(73) Proprietors:
• **Fundación Azterlan**
**48200 Durango (Bizkaia) (ES)**
• **Irizar S.Coop**
**20216 Ormaiztegi (Gipuzkoa) (ES)**

(72) Inventors:
• **Muro, Maider**
**48200 Durango (Bizkaia) (ES)**
• **Artola, Garikoitz**
**48200 Durango (Bizkaia) (ES)**
• **Urcelay, Mikel**
**20216 Ormaiztegi (Gipuzkoa) (ES)**
• **Etxebeste, Joxean**
**20216 Ormaiztegi (Gipuzkoa) (ES)**

(74) Representative: **Balder IP Law, S.L.**
**Paseo de la Castellana 93**
**5ª planta**
**28046 Madrid (ES)**

(56) References cited:
**WO-A1-2017/103169    WO-A1-2019/016624
US-B2- 10 065 272**

**Description**

**FIELD OF THE INVENTION**

The present invention refers to the ground vehicle sector, and more particularly, to structural improvements in the vehicle superstructures that significantly reduce risks and damages for passengers in rollover accidents.

**BACKGROUND OF THE INVENTION**

In buses, rollover safety is a major design concern for manufacturers. In the present document, the term "bus" may refer to any kind of conventional bus, coach bus, minibus and mini coach bus. Despite rollover accidents are less frequent than other types of accident in buses, the severity and potential damage of rollover accidents has led to specific legislation such as FMVSS 220 in the United States of America and ECE R66 in Europe. These regulations specify the characteristics that the bus superstructure must satisfy in order to minimize risks and damages. As used herein, the term "superstructure" may refer to the elements of the vehicle structure that confer strength and integrity to the vehicle under accident conditions in order to preserve a survival space for the passengers.

Rollover safety ring is a key element in these bus superstructures. As used herein, the term "rollover safety ring" may refer to those structural elements of the bus superstructure that withstand forces generated during a rollover accident of the bus attempting to maintain the integrity of a survival space for passengers. This rollover safety ring is also known as Body-in-White in automotive industry. These structural elements are structural curved arches or ribs that link both sides of the bus across its roof defining the internal safety space of the bus in which the occupants travel. These structural curved arches or ribs are generally connected to the main body of the superstructure (the main body refers to the rest of the vehicle superstructure excluding the rollover safety ring) at corresponding body knots. As used herein, the term "body knot" may refer to the joints, generally welded, riveted or screwed, of the structural elements of the rollover safety ring to the main body of the bus superstructure. The most common solution for manufacturing these structural curved arches is the use of tubular elements of square section which are mechanically fixed, e.g., welded, to the main body of the superstructure, which significantly increases the weight of the superstructure resulting in greater fuel consumptions of the bus. These joints between the arches and the rest of the superstructure are generally called knots.

As it is well known in the road transportation sector, weight saving is a main concern for vehicle manufacturers. Automotive designs have saved a great amount of weight by using high strength steels in the vehicle superstructures, which allow reducing Body-in-White steel sheet thickness without sacrificing crashworthiness. Nevertheless, the steel grades and the press hardening technology employed in light vehicles, such as cars or vans, are not applicable to the rollover safety rings of large vehicles, such as buses, due to limitations arising from the tube manufacturing process, and from the bending and welding processes of said structural arches to the rest of the superstructure. Among these limitations, press hardened designs require open profiles which are about twice as wide as tubular profile designs for a given bending resistance of the safety ring and show lower torsion stiffness.

Furthermore, thickness reductions in tube walls increase slenderness, what can lead to buckling induced failures in rollover accidents, with loads which are lower than the expected resistance increase obtained using higher strength steels. Due to the load distributions on rollovers, these buckling induced failures are mostly located in the body knots.

In addition, other type of vehicles, e.g., agricultural or construction vehicles that normally drive through irregular surfaces, are subjected to work conditions that may imply higher rollover accident rates. Thus, improved superstructures that ensure the integrity of the safety space for passengers at the same time that their weight is not significantly increased may be also especially recommended for these vehicles.

Therefore, there is still the need in the state of the art of a solution that allows a reduction in the weight of the superstructures of the vehicles, in particular for road passenger transport vehicles, agricultural vehicles and constructions vehicles, among others, without compromising the crashworthiness of the vehicles by means of a high strength material tubular rollover safety ring and the use of buckling retardation body knots to join the rollover safety ring to the rest of the vehicle superstructure.

Document WO 2019/016624 A1 discloses a rollover safety ring according to the preamble of claim 1.

**SUMMARY OF THE INVENTION**

The present invention overcomes the aforementioned problems by disclosing a rollover safety ring for vehicles, a vehicle superstructure including the rollover safety ring and the body knots to mechanically couple the rollover safety ring to the main body of the vehicle superstructure, a method for manufacturing the rollover safety ring and a method for coupling the rollover safety ring to the main body of the vehicle superstructure. The solution herein described comprises a rollover safety ring made of high strength tubular steel profile sections made of steel with a tensile strength higher than 1,000 MPa. The rollover safety ring design disclosed herein, and thus, the described vehicle superstructure design, allows meeting the Force-Deflection curves of the bending tests indicated on the ECE R66 and FMVSS 220, respectively, with thinner steel sheets and smaller sections than those achievable with lower strength materials. In addition, the body knots described in the present document that are used to couple the rollover safety ring to the main body of the superstructure retard the appearance of buckling instabilities and displace them towards the roof of the vehicle in such a way that the survival space inside the vehicle is ensured to fulfill the regulations cited above.

A first object of the present invention is defined by the features of claim 1, which concerns a a rollover safety ring for vehicles, e.g., road passenger transportation vehicles (buses, coaches, minibuses, mini coach buses, etc.) and agricultural or construction vehicles, among others. The rollover safety ring defines a longitudinal axis (L), a vertical axis (V) and a transversal axis (T), the vertical and transversal axis (V, T) being orthogonal to each other. The axis defined by the rollover safety ring may correspond to the axis defined by the vehicle itself. The rollover safety ring comprises a plurality of structural arches spaced from each other in the longitudinal axis (L), said arches defining an inner safety space of the rollover safety ring, and therefore, of the vehicle. This inner safety space at least comprises the space occupied by the passengers or occupants of the vehicle. The structural arches are formed of a plurality of tubular steel profile sections and may have a substantially inverted U-shape. In the present document, the term "tubular" when referring to the tubular steel profile sections of the rollover safety ring is not intended to limit the shape of the cross-section of the profile to a particular shape. In some embodiments, the tubular steel profile sections may have a circular cross-section while in some other embodiments, other cross-sections such as a square cross-section, a rectangular cross-section and a T, omega or C-shaped cross-section, among others, may be preferred.

The steel of the tubular steel profile sections comprises an amount of carbon between 0.15% and 0.35% in weight, an amount of boron less than 0.005% in weight and a carbon equivalent content, CE, that is less than 0.78% in weight, the carbon equivalent content being calculated by the formula:

$$CE = \%C + \frac{(\%Mn + \%Si)}{6} + \frac{(\%Cr + \%Mo)}{5}$$

wherein %C is a percentage of carbon content in weight, %Mn is a percentage of manganese content in weight, %Si is a percentage of silicon content in weight, %Cr is a percentage of chromium content in weight and %Mo is a percentage of molybdenum content in weight of the steel. Besides, the thickness of the tubular steel profile is between 1 mm and 5 mm and the tensile strength of the steel of the tubular steel profile sections is higher than 1,000 MPa. This solution provides a lighter rollover safety ring whose design complies with the above cited safety requirements. More preferably, the tensile strength of the steel may range from 1,200 to 1,500 MPa.

In some embodiments, each structural arch comprises a plurality of tubular steel profile sections coupled, e.g., welded, to each other. At least a first tubular steel profile section of the plurality of tubular steel profile sections substantially extends in the vertical axis (V) and at least a second tubular steel profile section of the plurality of tubular steel profile sections substantially extends in the transversal axis (T).

In some embodiments, the tubular steel profile sections have a substantially rectangular or square cross-section. This rectangular or square cross-section provides higher torsional rigidity for the tubular steel profile sections and facilitates the manufacture and assembly of said sections. Nevertheless, tubular steel profile sections with circular, C-shaped, omega-shaped, T-shaped or any other type of cross-section having a similar tensile strength (higher than 1,000 MPa) but with a different or similar rigidity may be used.

In some embodiments, the thickness of the tubular steel profile sections is lower than 3 mm, the amount of carbon content in the steel is between 0.15% and 0.25% in weight and the carbon equivalent content of the steel is lower than 0.62 % in weight. The features mentioned in such embodiments provide an optimal solution in terms of weldability and strength for the tubular steel profile sections.

In some embodiments, the steel is a 22MnB5 grade cold rolled steel with a thickness between 2 and 3 mm and with a composition in weight of 0.21-0.25 %C; 0.15-0.40 %Si; 1.10-1.35%Mn; 0.10-0.25 %Cr and 0.0015-0.0040 %B. The use of steel 22MnB5, that is an industry standard, reduces costs and simplifies logistic operations since the steel used for the tubular steel profile sections has not to be expressly manufactured. Although the addition of boron or molybdenum have a similar effect in the steel in terms of hardenability, the use of boron (instead of Mo) may be preferred since it is cheaper than molybdenum. The combination of the features mentioned in such embodiments provides an optimal solution in terms of hardenability, weldability and strength for the tubular steel profile sections.

In some embodiments, the rollover safety ring comprises a protective coating at least partially covering the tubular steel profile sections, the protective coating having a thickness lower than 100 microns. For example, at least a 95% in weight of the protective coating may be made of a mixture of aluminum, iron and silicon, although other percentages of the same or other combinations of materials may be also used. In some embodiments, the structural arches of the rollover safety ring may be entirely coated with the protective coating. In some other embodiments, only some parts of the structural arches may be coated with the protective coating. Alternatively, the tubular steel profile sections may be uncoated. The coating protects the steel from decarburization and avoids the appearance of oxide scale when the tubular steel profile sections are hardened by using a gas furnace for austenitizing.

In some embodiments, the tubular steel profile sections are tubular cold rolled steel profile sections or tubular hot rolled steel profile sections. Cold rolling processes allow obtaining thinner thicknesses and narrower tolerances in sheet thickness. Thus, the weight and the dimensional tolerances of the tubular cold rolled steel profile sections can be better adjusted.

In some embodiments, the tubular steel profile sections are tubular cold rolled steel profile sections with a thickness below 3 mm, with a carbon content between 0.15% and 0.25% in weight and a carbon equivalent content below 0.62 % in weight.

A second object of the present invention is a vehicle superstructure that comprises a main body, the rollover safety ring as described in any one of the previous paragraphs and body knots that couple lower ends of the structural arches of the rollover safety ring to the main body of the superstructure. Preferably, the lower ends of the structural arches may be coupled to the outer surface of the main body in order to maximize the safety space defined by the main body and the rollover safety ring, i.e., by the whole vehicle superstructure. At least the lower ends of the structural arches may have a substantially rectangular or square cross-section that define a front outer surface, a rear outer surface and two side outer surfaces of the lower ends. In other words, only the lower portion of the lower tubular steel profile section that is to be coupled to the main body of the superstructure may present a substantially rectangular or square cross-section while the rest of the structural arches may present the same or a different cross-section. Alternatively, the lower ends may present a different cross-section, such as a T-shaped cross-section, provided that the steel with which said tubular steel profile sections have been made presents a tensile strength higher than 1,000MPa. The lower ends having a substantially rectangular or square cross-section facilitates the coupling of the rollover safety ring to the main body by the body knots.

Each one of the body knots of the vehicle superstructure comprises a spacer element attached to the rear outer surface of the lower end and to the main body. In particular, the spacer element may be welded to at least one structural element of the main body such as a tube, panel, reinforcement element, etc. Therefore, the lower ends of the structural arches are coupled to the main body of the superstructure by interposition of respective spacer elements. These spacer elements may be rectangular metal sheets welded to the respective lower end and to the main body. The spacer element avoids the direct welding of the lower end to the main body. The temperature reached in the lower during its direct welding to the main body may weaken the structure of the cited lower end. On the contrary, the two-step welding of the spacer element to the lower end and to the main body does not significantly affect the structural integrity of the lower ends, ensuring that the steel of said lower ends present a tensile strength higher than 1,000 MPa.

Each one of the body knots of the vehicle superstructure also comprises a supporting element that is attached at least to each one of the two side outer surfaces of the lower end, to the spacer element and to the main body. These supporting elements may have a length that substantially corresponds to the sum of the width of the side outer surface and the width of the spacer element. The supporting elements may be rectangular pieces of metal welded to the respective side outer surfaces of the lower ends and also to the spacer element and to the main body, in particular to the same structural element of the main body the spacer element is coupled to. Alternatively, the supporting elements may be rib elements or may have any other geometry and shape.

Additionally, each body knot comprises a stiffening element attached at least to each one of the two side outer surfaces of the lower end and to the respective supporting element, more particularly to an upper surface or edge of the supporting element. The stiffening elements may be rectangular pieces of metal welded to the respective side outer surfaces of the lower ends and also to the upper surface or edge of the corresponding supporting elements. These stiffening elements increase the thickness of the walls of the tubular steel profile section on which they are coupled to. This thickness increase reduces the appearance of buckling instabilities on these reinforced parts of the lower ends, displacing said instabilities towards the roof of the vehicle in such a way that the survival space inside the vehicle is ensured to fulfill the regulations cited above. Besides, at least part of the buckling loads absorbed by the stiffening elements are transmitted to the main body via the supporting elements.

This buckling retardation is achieved thanks to the slenderness modification and stress redistribution that is produced by the presence of the stiffener elements along all the length covered by the stiffener elements.

In some embodiments, the stiffening elements may be positioned centered on the respective side outer surfaces of the lower end and in correspondence with the longitudinal axis of the lower end.

The spacer element, the stiffening elements and the supporting elements may be made of any weldable carbon steel having a strength equal or higher than S235JR. The thickness of the supporting elements may be equal or higher than the thickness of the steel sheet of the tubular steel profile sections.

A third aspect of the invention is defined by the features of claim 11, which concerns a method of manufacturing the rollover safety ring as described in any one of the previous paragraphs. The method comprises manufacturing the plurality of tubular steel profile sections. For manufacturing each tubular steel profile section of the plurality of tubular steel profile sections, the manufacturing step, in turn, comprises: cold shaping a strip of a steel sheet forming a steel profile section with a tubular shape. Then, the shaped strip is longitudinally welded to close the tubular steel profile section and the tubular steel profile section is hardened by austenitizing and quenching. The method further comprises coupling the plurality of the tubular steel profile sections to each other, preferably by welding, by their cross-sections forming the respective structural arches of the rollover safety ring.

In some embodiments, the method comprises bending at least some of the tubular steel profile sections to meet the shape of the particular structural arch. In particular, those tubular steel profile sections corresponding to the curved parts of the structural arches, e.g. the roof section of a bus, might be bent by any known mechanical process.

In some embodiments, the method comprises cold or hot straightening the tubular steel profile sections to compensate hardening deformations.

In some embodiments, a 40x60x2 (section width x section length x sheet thickness) mm cold bent tubular steel profile section made in 22MnB5 coated with an AlSi coating is hardened by austenitizing in a gas furnace at a temperature between 840°C and 980°C and quenched in water at a cooling rate that is higher than 10°C/s. Then, a subsequent cold sizing step may be applied to the quenched tubular steel profile sections, if needed. Low-temperature hardening (less than 840°C) may result in incomplete hardenings and high-temperature hardening (higher than 980°C) may generate deformations difficult to correct.

In some other embodiments, a 40x60x2.5 mm cold bent tubular steel profile section made in 22MnB5 steel without coating is austenitized by induction heating and quenched by a water and polymer mix quenchant jet. In such embodiments, a subsequent cold sizing step is not applied to the quenched tubular steel profile sections.

In some other embodiments, a 40x60x2.5 mm cold bent tubular steel profile section made in 22MnB5 steel without coating is austenitized by conduction heating and quenched by a water and polymer mix quenchant jet. In such embodiments, a subsequent cold sizing step is not applied to the quenched tubular steel profile sections.

In some embodiments, at least two tubular steel profile sections are assembled, preferably by welding, in parallel to each other to form a bundle of tubular steel profile sections. In other words, a bundle of tubular steel profile sections, generally comprising two sections, may be created by welding said tubular steel profile sections side-to-side. This assembly can be performed at any stage of the manufacturing process, but it is preferably performed before the cold bending of the tubular steel profile sections, in case this step is performed. The bundle of tubular steel profile sections may be preferably austenitized for hardening by conduction heating or gas furnace. The resulting structural arches formed by the bundles of tubes are generally located at both ends of the rollover safety ring, i.e., at the beginning and at the end of the vehicle superstructure.

In some embodiments, two 40x60x2 mm cold bent tubes made in 22MnB5 coated with an AlSi coating, are welded in parallel to each other mating the 60 mm side to form a 80x40 mm tube bundle, is cold bent into the desired shape and hardened by austenitizing in a gas furnace at a temperature between 850°C and 980°C and quenching in water at a cooling rate higher than 10°C/s without a subsequent cold sizing.

In any case, the steps of the method of manufacturing the rollover safety ring may be carried out in a different order than the one described in the previous paragraphs, obtaining the same tubular steel profile sections and structural arches.

A fourth object of the present invention is defined by the features of claim 15, which concerns a method of coupling a rollover safety ring, as previously described, to the main body of a vehicle superstructure, e.g., a bus superstructure. Although the structural arches may have any cross-section able to provide a tensile strength higher than 1,000 MPa (independently of the rigidity provided), at least the lower ends of the structural arches of the rollover safety ring may have a substantially rectangular or square cross-section. This particular geometry provides higher strength, rigidity and facilitates its manufacturing and coupling process. This rectangular or square cross-section defines a front outer surface, a rear outer surface and two side outer surfaces of the lower portions. The method comprises coupling a spacer element to the rear outer surface of the lower end, coupling a respective stiffening element to each one of the two side outer surfaces of the lower end, coupling the spacer element to the main body and coupling a respective supporting element to each one of the two side outer surfaces of the lower end, to a lower edge of the corresponding stiffening element, to the spacer element and to the main body.

The coupling of the stiffening elements, the spacer element and the supporting elements to the tubular steel profile section and the main body, respectively, creates the body knots between the structural arches of the rollover safety ring and the main body, creating, in turn, the superstructure of the vehicle.

Although the steps of the method of coupling the rollover safety ring to the main body have been described with a particular order, said steps may be carried out in a different order than the one described in the previous paragraphs, obtaining the same body knots.

The stiffening elements may be rivetted, fastened or welded to the side outer walls of the lower ends such that these stiffening elements share the loads generated into the body knot in the event of a rollover accident. This sharing of the loads in the body knots avoids buckling collapse to happen in the joints between the rollover safety ring and the main body and reduces the likelihood that said collapse may happen in the length covered by the stiffener under bending tests according ECE R66 and FMVSS 220.

The width of the spacer element may substantially correspond to the section width of the rear outer surface of the lower end on which it is welded, such that the welding runs to couple the spacer element to the lower end may be made on the corners between the rear outer surface and the two side outer surfaces of the lower end (and in correspondence with the side edges of the spacer elements). These welding runs provide enough strength to the joint reducing effects on the integrity of the structural arch. In particular the surfaces of the lower end (front and rear outer surfaces) corresponding to the maximum tension and compression stress bearing flat surfaces of the tubular steel profile section under bending tests according ECE R66 and FMVSS 220 may be free of welding runs.

In some embodiments, the cross section of the lower end of the structural arches is rectangular and all the coupling in the body knots are performed by welding. Besides, the stiffening elements may be two square or rectangular metal sheets welded to the side outer surfaces of the lower ends and located in correspondence with the position of the neutral axis (equivalent to the longitudinal axis of the lower end of the structural arch) of the bending that is located for bending tests according ECE R66 and FMVSS 220.

In a particular embodiment, a safety rollover ring made of 22MnB5 hardened tubular steel profile sections of nominal dimensions 40x60x2 mm is joined in a body knot whose stiffener elements are two carbon steel patches of dimensions 50x60x3 (width x length x thickness) which are welded in the 40 mm side of the hardened tubular steel profile section. The tubular steel profile section is welded to three knot elements: a steel spacer element which is welded to the tubular steel profile section and the main body and two steel support parts which are welded to the tubular steel profile section, to the respective stiffener element and main body.

The main advantage of this invention is the possibility of employing lighter rollover safety rings that occupy less space in the superstructure without sacrificing the safety requirements obliged by ECE R66 or FMVSS 220.

BRIEF DESCRIPTION OF THE DRAWINGS

For the purpose of aiding the understanding of the characteristics of the invention, according to a preferred practical embodiment thereof and in order to complement this description, the following figures are attached as an integral part thereof, having an illustrative and non-limiting character:

Figure 1 shows a schematic view of the elements forming the superstructure of a vehicle, in particular, the rollover safety ring and the main body, according to a particular embodiment of the invention.
Figure 2 shows a schematic view of part of the superstructure of Figure 1, illustrating the buckling problem arising from slenderness increase due to the use of higher strength steel with lower thickness.
Figure 3 shows a flow diagram of the method of manufacturing a rollover safety ring, according to a particular embodiment of the invention.
Figure 4 shows a flow diagram of the method of coupling a rollover safety ring to the main body of the vehicle superstructure, according to a particular embodiment of the invention.
Figure 5 shows an exploded view of a body knot, according to a particular embodiment of the invention.
Figure 6 shows a perspective view of the body knot of Figure 5.

**DETAILED DESCRIPTION OF THE INVENTION**

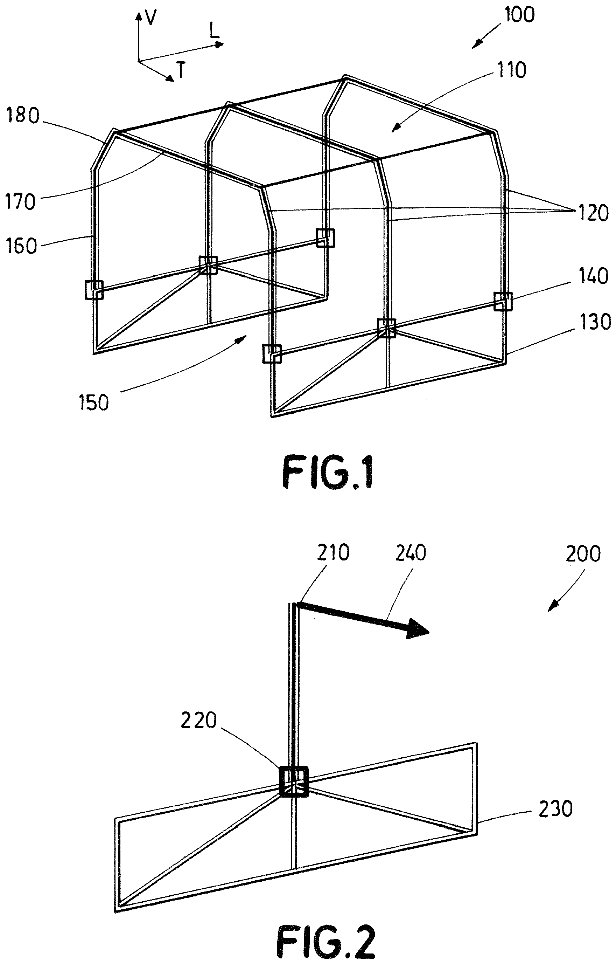

Figure 1 shows a schematic view of the elements forming the superstructure 100 of a vehicle, e.g., a bus. The superstructure 100 comprises a rollover safety ring 110 formed by three structural arches 120 coupled to the main body 130 by respective body knots 140. It should be understood that the superstructure of Figure 1 may include additional components and that some of the components described herein may be removed and/or modified without departing from a scope of the described superstructure 100. Additionally, implementation of the superstructure 100 is not limited to such embodiment.

The rollover safety ring 110 shown in Figure 1 is formed by three structural arches 120 equally spaced from each other in the longitudinal axis (L). These three structural arches 120 have first portions 160 (defining the side walls of the vehicle) located at both sides of the superstructure 100 and substantially extending in the vertical axis (V), a second portion 170 (defining the roof of the vehicle) substantially extending in the transversal axis (T) and respective transition portions 180 that join the upper ends of the first portions 160 with the second portion 170. While the first portions 160 and the second portion 170 are substantially straight, the transition portions 180 may be straight or curved. Each one of these portions 160,170,180 may be made of one single tubular steel profile section or may be formed by a plurality of tubular steel profile section welded to each other. The number of tubular steel profile sections that form the structural arches 120 will depend on the dimensions of the rollover safety ring 110 to be installed in the vehicle.

Each structural arch 120 is coupled to the main body 130 by two body knots 140 located in correspondence with each one of the lower ends of the first portions 160 of the structural arches 120 and in correspondence with upper structural elements of the main body 130 to which the lower ends of the structural arches 120 are coupled. In addition, the structural arches 120 may be coupled to each other by reinforcing ribs 190 extending in the longitudinal axis (L) that join the transition portions 180 ort the second portions 170 of the respective structural arches 120

The rollover safety ring 110 and the main body 130 determine the inner safety space 150 for the passengers of the bus.

While Figure 1 shows a rollover safety ring comprising three structural arches having a particular geometry, the rollover safety ring may comprise a different number of structural arches with a different geometry. Similarly, although the main body of the superstructure shown in Figure 1 presents a particular geometry and number of structural elements, the main body may have a different number of structural elements with a different spatial arrangement.

Figure 2 shows a view of part of the superstructure 200 of Figure 1, illustrating the buckling problem arising from slenderness increase due to the use of higher strength steel with lower thickness. This superstructure 200 is formed by the main body 230, the structural arches 210 of the rollover safety ring and the body joints 220 that couple the structural arches 210 to the main body 230.

In the structural arch 210 shown in Figure 2, a bending load 240 is inwardly applied. This bending load simulates the forces that the rollover safety withstands in a rollover accident. Thus, said Figure 2 illustrates the ECE R66 bending test configuration, and simulates a type of bending load scenario in which tensile stresses are applied on half of the tube and compressive stresses in the opposite.

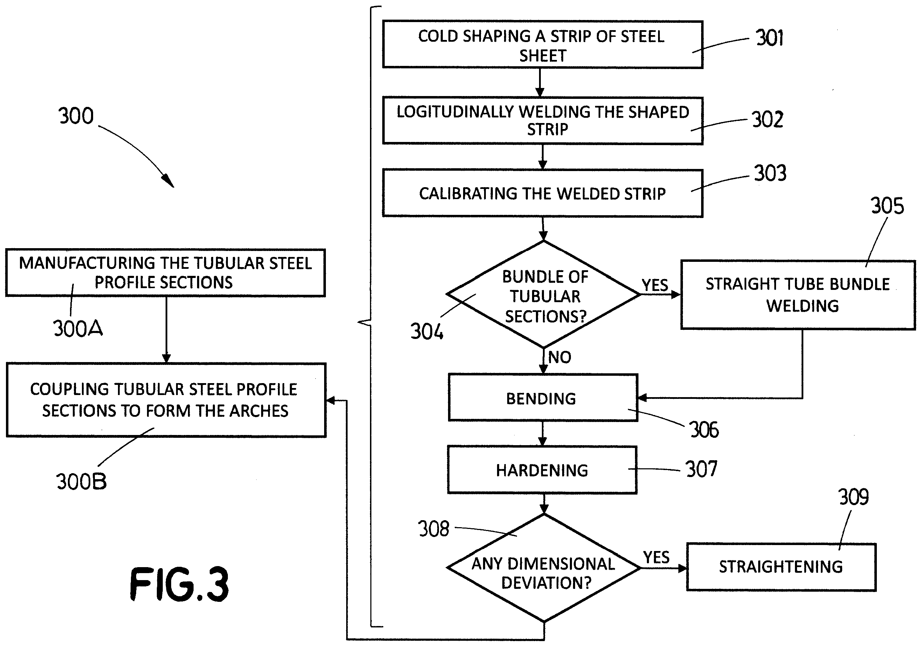

Figure 3 shows a flow diagram of the method 300 of manufacturing a rollover safety ring, according to a particular embodiment of the invention. The method comprises manufacturing 300A the plurality of tubular steel profile sections and coupling 300B the plurality of the tubular steel profile sections to each other, preferably by welding, by their cross-sections forming the respective structural arches of the rollover safety ring.

Step 300A comprises a number of substages for manufacturing each tubular steel profile section of the plurality of tubular steel profile sections. At substage 301 of the step 300A of the method 300, a strip of a steel sheet is cold shaped forming a tubular steel profile section with a substantially circular cross-section. Then, at substage 302 of the method 300 the shaped strip is longitudinally welded to close the steel profile section. At substage 303 of the method 300, the welded strip is calibrated to conform the tubular steel profile section with a rectangular cross-section. Alternatively, the cold shaping substage 301 may be adapted to directly conform the tubular steel profile section with a rectangular cross-section avoiding substage 303. Then, at substage 304 of the method 300, it is determined whether the obtained tubular steel profile section is to be part of one of the reinforced structural arches (arches normally located at the front and rear of the vehicle) formed by more than one arches welded in parallel. If the tubular steel profile section is to be part of one of these reinforced arches, then said tubular steel profile section is welded 305 (straight welding) along its longitudinal axis to at least another tubular steel profile section to form a bundle of tubular steel profile sections. Then, at substage 306 of the method 300, either the individual tubular steel profile section or the bundles of tubular steel profile sections which are to be located in the curved areas of the structural arches are mechanically bent. Alternatively, the individual tubular steel profile sections may be firstly bent and afterwards, welded along its longitudinal axis to at least another tubular steel profile section to form a bundle of tubular steel profile sections. After that, at substage 307 of the method 300, the tubular steel profile sections or bundles of tubular steel profile sections are hardened by austenitizing and quenching.

Then, at substage 308 of the method, it is checked whether the resulting tubular steel profile sections and bundles of tubular steel profile sections present any dimensional deviation. If so, a straightening substage 309 is carried out on the sections to be corrected.

Before coupling, at step 300B of the method 300, the plurality of the tubular steel profile sections to each other, preferably by welding, by their cross-sections, the tubular steel profile section (or the respective bundle) corresponding to the lower end of the structural arch may be coupled to the main body by the corresponding body knot. Then, the rest of the tubular steel profile sections or bundles are coupled to the already assembled tubular section to create the structural arch. This facilitates the process for coupling the rollover safety ring to the main body.

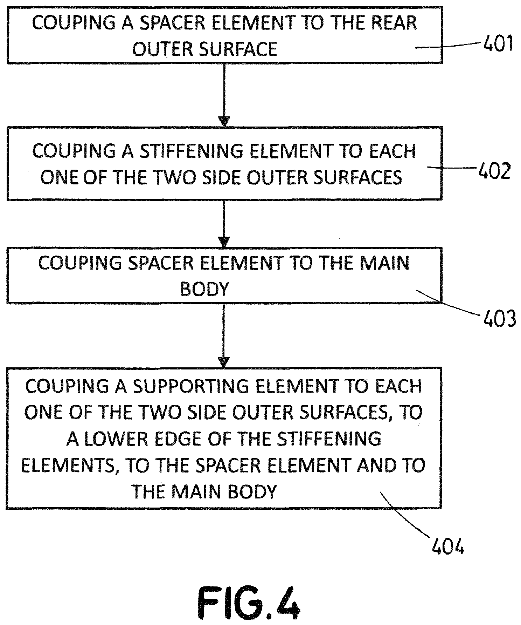

Figure 4 shows a flow diagram of the method 400 of coupling a rollover safety ring to the main body of the vehicle superstructure, according to a particular embodiment of the invention.

Although the structural arches of the rollover safety ring may have any cross-section able to provide a tensile strength higher than 1,000 MPa (independently of the rigidity provided), at least the lower ends of the structural arches of the rollover safety ring may have a substantially rectangular or square cross-section. This particular geometry provides higher strength, rigidity and facilitates its manufacturing and coupling process. This rectangular or square cross-section defines a front outer surface, a rear outer surface and two side outer surfaces of the lower portions.

At step 401 of the method 400, a spacer element is coupled, e.g., welded, to the rear outer surface of the lower end of the structural arch. At step 402 of the method 400, a respective stiffening element is coupled, e.g., welded or riveted, to each one of the two side outer surfaces of the lower end. At step 403 of the method 400, the spacer element is coupled, e. g, welded to the main body. At step 404 of the method 400, a respective supporting element is coupled, e.g., welded, to each one of the two side outer surfaces of the lower end, to a lower edge of the corresponding stiffening element, to the spacer element and to the main body.

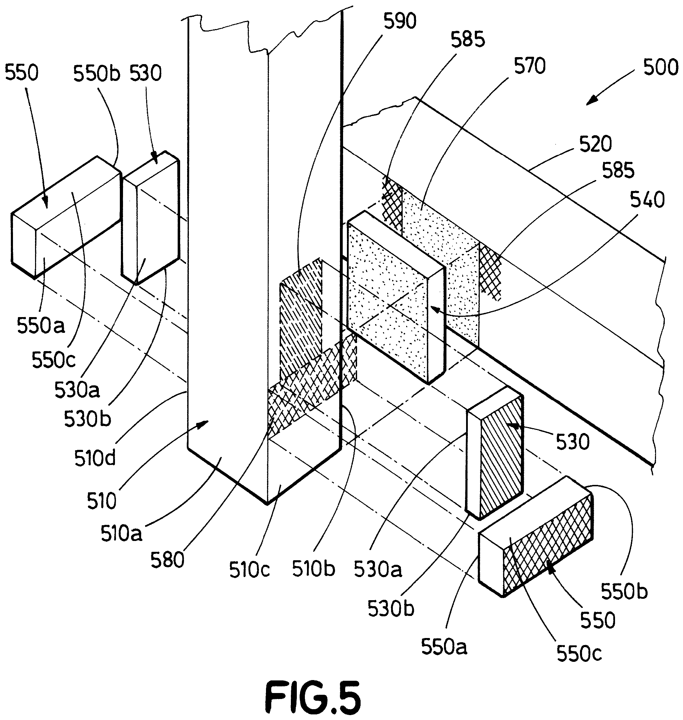

Figure 5 shows an exploded view of a body knot 500 according to a particular embodiment of the invention. It should be understood that the body knot 500 of Figure 5 may include additional components and that some of the components described herein may be removed and/or modified without departing from a scope of the described body knot 500. Additionally, implementation of the body knot 500 is not limited to such embodiment.

The body knot 500 couples the lower end of a structural arch 510 of the rollover safety ring to the main body of the vehicle superstructure. The lower end of said structural arch 510 is coupled to one of the structural elements 520, in particular to a horizontal structural tube, of the main body of the superstructure by interposition of the spacer element 540. The rectangular cross-section of the lower end of the structural arch defines a front outer surface 510a, a rear outer surface 510b and two side outer surfaces 510c-d. Although Figure 5 shows the spacer element 540 being a substantially rectangular piece whose height corresponds to the width of the structural tube 520 the height of the spacer element 540 may be different. For example, the spacer element 540 may have a height and a width that is lower than the width of the structural tube 520. The spacer element 540 is coupled to the rear outer surface 510b of the lower portion by at least to welding runs located in correspondence with the side edges of the spacer element 540 the corners between the rear outer surface 510b and the two side outer surfaces 510c-dof the lower end 510. The front outer surface 510a and the rear outer surfaces 510b, corresponding to the maximum tension and compression stress bearing flat surfaces of the tubular steel profile section under bending tests according ECE R66 or FMVSS 220, are free of welding runs. The spacer element 540 is also coupled to the shaded surface 560 of the structural tube 520. The spacer element 540 is preferably welded to the structural arch 510 and to the structural tube 520 of the main body.

The body knot 500 also comprises a corresponding supporting element 550 coupled to each one of the two side outer surfaces 510c-d of the lower end of the structural arch 510, to the spacer element 540 and to the main body. The supporting elements 550 have a width that substantially corresponds to the sum of the width of the side outer surface 510c-d and the thickness of the spacer element 540, such that the rear surface 550a of the stiffening elements contacts (shaded area 580) the corresponding side outer surface 510c-d of the lower end of the structural arch 510 and the side surfaces of the spacer element 540. Besides the inner side surface 550b of the supporting elements 550 is coupled (shaded area 585) to the structural tube 520 of the main body.

Additionally, the body knot 500 further comprises a respective stiffening element 530 whose rear surface 530a is attached to each one of the two side outer surfaces 510c-d of the lower end of the structural arch 510 and whose lower surface 530b is attached to the upper surface or edge 550c of the respective supporting element 550. The stiffening elements may be rectangular pieces of metal welded to the respective side outer surfaces of the lower ends and also to the upper surface or edge of the corresponding supporting elements.

These body knots retard the appearance of buckling instabilities and displacing them towards the roof of the vehicle in such a way that the survival space inside the vehicle is ensured to fulfill the regulations cited above. This is achieved by introducing the stiffener elements that prevent buckling instabilities. This stiffener elements have a double function of reducing the slenderness of the section in the length that is covered by the stiffener and of sharing the loads produced during rollover in the length covered by the stiffener.

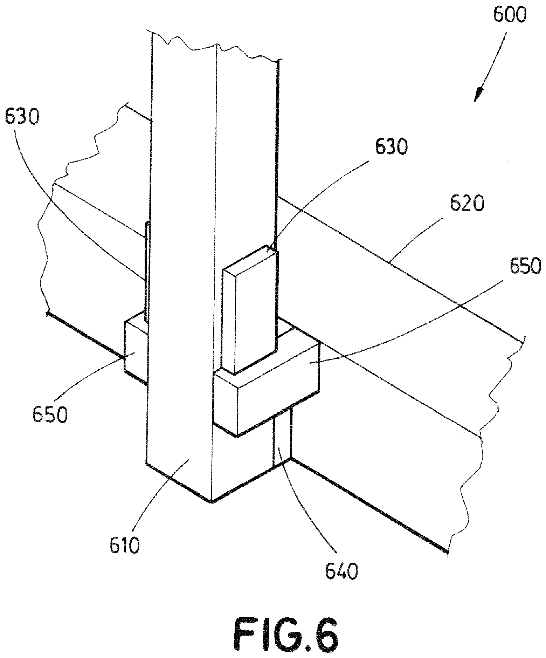

Figure 6 shows a perspective view of the body knot of Figure 5 with all the elements forming the body knot coupled to each other.

Note that in this text, the term "comprises" and its derivations (such as "comprising", etc.) should not be understood in an excluding sense, that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

**Claims**

1. A rollover safety ring (110) for a vehicle, also known as Body-in-White, the rollover safety ring (110) defining a longitudinal axis (L), a vertical axis (V) and a transversal axis (T), the axis (V, T) being orthogonal to each other, and comprising a plurality of structural arches (120) spaced from each other in the longitudinal axis (L) that define an inner safety space (150), and wherein the structural arches (120) are formed of a plurality of tubular steel profile sections,

   **characterized in that** the steel of the tubular steel profile sections comprises an amount of carbon between 0.15% and 0.35% in weight, an amount of boron less than 0.005% in weight and a carbon equivalent content, CE, that is lower than 0.78, the carbon equivalent content being calculated by the formula:

$$CE = \%C + \frac{(\%Mn + \%Si)}{6} + \frac{(\%Cr + \%Mo)}{5}$$

wherein %C is a percentage of carbon content in weight, %Mn is a percentage of manganese content in weight, %Si is a percentage of silicon content in weight, %Cr is a percentage of chromium content in weight and %Mo is a percentage of molybdenum content in weight of the steel; and

wherein a thickness of the tubular steel profile sections is between 1 mm and 5 mm and a tensile strength of the steel is higher than 1,000 MPa.

2. The rollover safety ring according to claim 1, wherein each structural arch (120) comprises a plurality of tubular steel profile sections coupled to each other, and wherein at least a first tubular steel profile section of the plurality of tubular steel profile sections substantially extends in the vertical direction (V) and a at least a second portion tubular steel profile section of the plurality of tubular steel profile sections substantially extends in the transversal direction (T).

3. The rollover safety ring according to any one of the preceding claims, wherein the tubular steel profile has a substantially rectangular or square cross-section.

4. The rollover safety ring according to any one of the preceding claims, wherein the thickness of the tubular steel profile sections is lower than 3 mm, the amount of carbon content in the steel is between 0.15% and 0.25% in weight and the carbon equivalent content of the steel is lower than 0.62.

5. The rollover safety ring according to any one of the preceding claims, wherein the steel is a 22MnB5 grade cold rolled steel to a thickness between 2 and 3 mm with a composition in weight of 0.21-0.25 %C; 0.15-0.40 %Si; 1.10-1.35%Mn; 0.10-0.25 %Cr and 0.0015-0.0040 %B.

6. The rollover safety ring according to any one of the preceding claims, comprising a protective coating at least partially covering the tubular steel profile sections, the protective coating having a thickness lower than 100 microns.

7. The rollover safety ring according to claim 6, wherein at least a 95% in weight of the protective coating is made of a mixture of aluminum, iron and silicon.

8. The rollover safety ring according to any one of the preceding claims, wherein the tubular steel profile sections are tubular cold rolled steel profile sections or tubular hot rolled steel profile sections.

9. A vehicle superstructure (100), comprising a main body (130), the rollover safety ring (110) according to any one of claims 1 to 8 and body knots (140,500) that couple lower ends (510) of the structural arches (120) of the rollover safety ring (110) to the main body (130,520), preferably to outer surfaces of the main body, at least the lower ends (510) of the structural arches (120) having a substantially rectangular or square cross-section defining a front outer surface (510a), a rear outer surface (510b) and two side outer surfaces (510c-d), **characterized in that** the body knots (500) comprise:

a spacer element (540) attached to the rear outer surface (510b) of the lower end (510) and to the main body (520); a respective supporting element (550) at least attached to each one of the two side outer surfaces (510c-d) of the lower end (510), to the spacer element (540) and to the main body (520); and a respective stiffening element (530) at least attached to each one of the two side outer surfaces (510c-d) of the lower end (510) and to an upper edge (550c) of the corresponding supporting element (550), wherein the stiffening elements (530) are configured to absorb buckling loads generated into the lower end (510) and transmit the bending loads to the main body (520) via the respective supporting elements (550).

10. The vehicle superstructure according to claim 9, wherein the stiffening elements (530) are positioned centered on the respective side outer surfaces (510c-d) of the lower end (510) and in correspondence with a longitudinal axis of the lower end (510).

11. A method of manufacturing the rollover safety ring of any one of claims 1 to 8, **characterized in that** the method comprises the steps of:

manufacturing (300A) a plurality of tubular steel profile sections, said manufacturing step comprising for each tubular steel profile section:

cold shaping (301) a strip of a steel sheet forming steel profile sections with a tubular shape;
longitudinally welding (302) the shaped strip; and
hardening (307) the welded tubular steel profile section by austenitizing and quenching;

coupling (300B) the plurality of the tubular steel profile sections to each other, preferably by welding, by their cross-sections forming the structural arches of the rollover safety ring.

12. The method of claim 11, comprising bending (306) at least some tubular steel profile sections to meet the structural arch shape.

13. The method of any one of claims 11 or 12, comprising cold or hot straightening (309) the tubular steel profile sections to compensate hardening deformations.

14. The method of any one of claims 11-13, comprising:

hardening the welded strip by austenitized at a temperature between 840°C and 980°C;
quenching the austenitized tubular steel profile sections in water based quenching fluid with a cooling rate higher than 10°C/s; and
cold straightening the quenched tubular steel profile sections.

15. A method of coupling the rollover safety ring of any one of claims 1 to 8 to a main body of a vehicle superstructure, wherein at least lower ends of the structural arches of the rollover safety ring have a substantially rectangular or square cross-section defining a front outer surface, a rear outer surface and two side outer surfaces, **characterized in that** the method comprises:

coupling (401) a spacer element to the rear outer surface of the lower end;
coupling (402) a respective stiffening element to each one of the two side outer surfaces of the lower end;
coupling (403) the spacer element to the main body;
coupling (404) a respective supporting element to each one of the two side outer surfaces of the lower end, to a lower edge of the corresponding stiffening element, to the spacer element and to the main body.

## Patentansprüche

1. Überrollschutzring (110) für ein Fahrzeug, auch bekannt als Rohkarosserie, wobei der Überrollschutzring (110) eine Längsachse (L), eine vertikale Achse (V) und eine Querachse (T) definiert, wobei die Achsen (V, T) orthogonal zueinander sind, und eine Vielzahl von Strukturbögen (120) umfasst, die in der Längsachse (L) voneinander beabstandet sind und einen inneren Sicherheitsraum (150) definieren, und wobei die Strukturbögen (120) aus einer Vielzahl von rohrförmigen Stahlprofilen gebildet sind,

**dadurch gekennzeichnet, dass** der Stahl der rohrförmigen Stahlprofile Kohlenstoff in einem Anteil zwischen 0,15 und 0,35 Gew.-%, Bor in einem Anteil von weniger als 0,005 Gew.-% und ein Kohlenstoffäquivalent, CE, von weniger als 0,78 aufweist, wobei das Kohlenstoffäquivalent nach der Formel berechnet wird:

$$CE = \%C + \frac{(\%Mn + \%Si)}{6} + \frac{(\%Cr + \%Mo)}{5}$$

wobei %C ein Gewichtsprozentsatz des Kohlenstoffgehalts ist, %Mn ein Gewichtsprozentsatz des Mangangehalts ist, %Si ein Gewichtsprozentsatz des Siliziumgehalts ist, %Cr ein Gewichtsprozentsatz des Chromgehalts ist und %Mo ein Gewichtsprozentsatz des Molybdängehalts des Stahls ist; und
wobei die Dicke der rohrförmigen Stahlprofile zwischen 1 mm und 5 mm liegt und die Zugfestigkeit des Stahls mehr als 1.000 MPa beträgt.

2. Überrollschutzring nach Anspruch 1, wobei jeder Strukturbogen (120) eine Vielzahl von miteinander verbundenen, rohrförmigen Stahlprofilen umfasst, und wobei sich mindestens ein erstes rohrförmiges Stahlprofil der Vielzahl von rohrförmigen Stahlprofilen im Wesentlichen in der vertikalen Richtung (V) erstreckt und sich mindestens ein zweites rohrförmiges Stahlprofil der Vielzahl von rohrförmigen Stahlprofilen im Wesentlichen in der Querrichtung (T) erstreckt.

3. Überrollschutzring nach einem der vorhergehenden Ansprüche, wobei das rohrförmige Stahlprofil einen im Wesentlichen rechteckigen oder quadratischen Querschnitt aufweist.

4. Überrollschutzring nach einem der vorhergehenden Ansprüche, wobei die Dicke der rohrförmigen Stahlprofile weniger als 3 mm beträgt, der Kohlenstoffgehalt im Stahl zwischen 0,15 und 0,25 Gew.-% liegt und das Kohlenstoffäquivalent des Stahls weniger als 0,62 beträgt.

5. Überrollschutzring nach einem der vorhergehenden Ansprüche, wobei der Stahl ein kaltgewalzter Stahl der Güte 22MnB5, mit einer Dicke zwischen 2 und 3 mm und einer Zusammensetzung in Gewichtsprozent von 0,21-0,25 %C; 0,15-0,40 %Si; 1,10-1,35 %Mn; 0,10-0,25 %Cr und 0,0015-0,0040 %B ist.

6. Überrollschutzring nach einem der vorhergehenden Ansprüche, umfassend eine Schutzschicht, welche die rohrförmigen Stahlprofile zumindest teilweise bedeckt, wobei die Schutzschicht eine Dicke von weniger als 100 Mikron aufweist.

7. Überrollschutzring nach Anspruch 6, wobei mindestens 95 Gew.-% der Schutzschicht aus einer Mischung aus Aluminium, Eisen und Silizium bestehen.

8. Überrollschutzring nach einem der vorhergehenden Ansprüche, wobei es sich bei den rohrförmigen Stahlprofilen um kaltgewalzte rohrförmige Stahlprofile oder um warmgewalzte rohrförmige Stahlprofile handelt.

9. Fahrzeugaufbau (100), umfassend einen Hauptkörper (130), den Überrollschutzring (110) nach einem der Ansprüche 1 bis 8 und Karosserieknoten (140, 500), die untere Enden (510) der Strukturbögen (120) des Überrollschutzrings (110) mit dem Hauptkörper (130, 520), vorzugsweise mit Außenflächen des Hauptkörpers, verbinden, wobei zumindest die unteren Enden (510) der Strukturbögen (120) einen im Wesentlichen rechteckigen oder quadratischen Querschnitt aufweisen, der eine vordere Außenfläche (510a), eine hintere Außenfläche (510b) und zwei seitliche Außenflächen (510c-d) definiert,

dadurch gekennzeichnet, dass die Karosserieknoten (500) Folgendes umfassen: ein Abstandselement (540), das an der hinteren Außenfläche (510b) des unteren Endes (510) und am Hauptkörper (520) befestigt ist; ein entsprechendes Stützelement (550), das zumindest an jeder der beiden seitlichen Außenflächen (510c-d) des unteren Endes (510), an dem Abstandselement (540) und an dem Hauptkörper (520) befestigt ist; und ein entsprechendes Versteifungselement (530), das zumindest an jeder der beiden seitlichen Außenflächen (510c-d) des unteren Endes (510) und an einem oberen Rand (550c) des entsprechenden Stützelements (550) befestigt ist, wobei die Versteifungselemente (530) so konfiguriert sind, dass sie in dem unteren Ende (510) erzeugte Knicklasten absorbieren und die Knicklasten über die jeweiligen Stützelemente (550) auf den Hauptkörper (520) übertragen.

10. Fahrzeugaufbau nach Anspruch 9, wobei die Versteifungselemente (530) mittig auf den jeweiligen seitlichen Außenflächen (510c-d) des unteren Endes (510) und in Übereinstimmung mit einer Längsachse des unteren Endes (510) angeordnet sind.

11. Verfahren zur Herstellung des Überrollschutzrings nach einem der Ansprüche 1 bis 8, dadurch gekennzeichnet, dass das Verfahren die folgenden Schritte umfasst:

Herstellung (300A) einer Vielzahl von rohrförmigen Stahlprofilen, wobei der Herstellungsschritt für jedes rohrförmige Stahlprofil umfasst:

Kaltverformung (301) eines Bandes aus Stahlblech zu rohrförmigen Stahlprofilen;
Schweißen (302) des geformten Bandes in Längsrichtung; und
Härten (307) des geschweißten rohrförmigen Stahlprofils durch Austenitisieren und Abschrecken;

Verbinden (300B) der Vielzahl von rohrförmigen Stahlprofilen miteinander, vorzugsweise durch Schweißen, wobei ihre Querschnitte die Strukturbögen des Überrollschutzrings bilden.

**12.** Verfahren nach Anspruch 11, umfassend das Biegen (306) zumindest einiger rohrförmiger Stahlprofile, um die Strukturbogenform zu erreichen.

**13.** Verfahren nach einem der Ansprüche 11 oder 12, umfassend das Kalt- oder Warmrichten (309) der rohrförmigen Stahlprofile zum Ausgleich von Härteverformungen.

**14.** Verfahren nach einem der Ansprüche 11 bis 13, umfassend:

Härten des geschweißten Bandes durch Austenitisierung bei einer Temperatur zwischen 840°C und 980°C;
Abschrecken der austenitisierten rohrförmigen Stahlprofile in einer Abschreckflüssigkeit auf Wasserbasis mit einer Abkühlgeschwindigkeit von mehr als 10°C/s; und
Kaltrichten der abgeschreckten rohrförmigen Stahlprofile.

**15.** Verfahren zum Verbinden des Überrollschutzrings nach einem der Ansprüche 1 bis 8 mit einem Hauptkörper eines Fahrzeugaufbaus, wobei zumindest die unteren Enden der Strukturbögen des Überrollschutzrings einen im Wesentlichen rechteckigen oder quadratischen Querschnitt aufweisen, der eine vordere Außenfläche, eine hintere Außenfläche und zwei seitliche Außenflächen definiert, **dadurch gekennzeichnet, dass** das Verfahren umfasst:

Verbinden (401) eines Abstandselements mit der hinteren Außenfläche des unteren Endes;
Verbinden (402) eines jeweiligen Versteifungselements mit jeder der beiden seitlichen Außenflächen des unteren Endes;
Verbinden (403) des Abstandselements mit dem Hauptkörper;
Verbinden (404) eines jeweiligen Stützelements mit jeder der beiden seitlichen Außenflächen des unteren Endes, mit einem unteren Rand des entsprechenden Versteifungselements, mit dem Abstandselement und mit dem Hauptkörper.

## Revendications

**1.** Bague de sécurité anti-retournement (110) pour un véhicule, également appelé carrosserie brute, la bague de sécurité anti-retournement (110) définissant

un axe longitudinal (L), un axe vertical (V) et un axe transversal (T), les axes (V, T) étant orthogonaux entre eux, et comprenant une pluralité d'arches structurelles (120) espacées les unes des autres sur l'axe longitudinal (L) qui définissent un espace de sécurité intérieur (150), et dans lequel les arches structurelles (120) sont formées d'une pluralité de sections profilées tubulaires en acier,
**caractérisé en ce que** l'acier des sections profilées tubulaires en acier comprend une quantité de carbone compris entre 0,15 % et 0,35 % en poids, une quantité de bore inférieure à 0,005 % en poids et une teneur en carbone équivalent, CE, qui est inférieure à 0,78, la teneur en carbone équivalent étant calculée par la formule :

$$CE = \%C + \frac{(\%Mn + \%Si)}{6} + \frac{(\%Cr + \%Mo)}{5}$$

dans laquelle %C est le pourcentage de la teneur en carbone en poids, %Mn est le pourcentage de la teneur en manganèse en poids, %Si est le pourcentage de la teneur en silicium en poids, %Cr est le pourcentage de la teneur en chrome en poids et %Mo est le pourcentage de la teneur en molybdène en poids de l'acier ; et
dans lequel l'épaisseur des sections profilées tubulaires en acier est comprise entre 1 mm et 5 mm et la résistance à la traction de l'acier est supérieure à 1 000 MPa.

**2.** Bague de sécurité anti-retournement selon la revendication 1, dans lequel chaque arche structurelle (120) comprend une pluralité de sections profilées tubulaires en acier couplées les unes aux autres, et dans lequel au moins une première section profilée tubulaire en acier parmi la pluralité de sections profilées tubulaires en acier s'étend sensiblement dans la direction verticale (V) et au moins une deuxième section profilée tubulaire en acier parmi la pluralité de sections profilées tubulaires en acier s'étend sensiblement dans la direction transversale (T).

**3.** Bague de sécurité anti-retournement selon l'une quelconque des revendications précédentes, dans lequel le profil tubulaire en acier a une section transversale sensiblement rectangulaire ou carrée.

**4.** Bague de sécurité anti-retournement selon l'une quelconque des revendications précédentes, dans lequel l'épaisseur des sections profilées tubulaires en acier est inférieure à 3 mm, la quantité de la teneur en carbone de l'acier est comprise entre 0,15 % et 0,25 % en poids et la teneur en carbone équivalent de l'acier est inférieure à 0,62.

**5.** Bague de sécurité anti-retournement selon l'une quelconque des revendications précédentes, dans lequel l'acier est un acier laminé à froid de qualité 22MnB5 jusqu'à une épaisseur comprise entre 2 et 3 mm ayant une composition en poids de 0,21 à 0,25 %C ; 0,15 à 0,40 %Si ; 1,10 à 1,35 %Mn ; 0,10 à 0,25 %Cr et 0,0015 à 0,0040 %B.

**6.** Bague de sécurité anti-retournement selon l'une quelconque des revendications précédentes, comprenant un revêtement protecteur couvrant au moins partiellement les sections profilées tubulaires en acier, le revêtement protecteur ayant une épaisseur inférieure à 100 micromètres.

**7.** Bague de sécurité anti-retournement selon la revendication 6, dans lequel au moins 95 % en poids du revêtement protecteur sont constitués d'un mélange d'aluminium, de fer et de silicium.

**8.** Bague de sécurité anti-retournement selon l'une quelconque des revendications précédentes, dans lequel les sections profilées tubulaires en acier sont des sections profilées tubulaires en acier laminé à froid ou des sections profilées tubulaires en acier laminé à chaud.

**9.** Superstructure de véhicule (100) comprenant une caisse principale (130), la bague de sécurité anti-retournement (110) selon l'une quelconque des revendications 1 à 8 et des nœuds de caisse (140, 500) qui couplent des extrémités inférieures (510) des arches structurelles (120) de la bague de sécurité anti-retournement (110) à la caisse principale (130, 520), de préférence à des surfaces extérieures de la caisse principale, au moins les extrémités inférieures (510) des arches structurelles (120) ayant une section transversale sensiblement rectangulaire ou carrée définissant une surface extérieure avant (510a), une surface extérieure arrière (510b) et deux surfaces extérieures latérales (510c-d),
**caractérisée en ce que** les nœuds de caisse (500) comprennent :

un élément écarteur (540) attaché à la surface extérieure arrière (510b) de l'extrémité inférieure (510) et à la caisse principale (520) ;
un élément de support respectif (550) au moins attaché à chacune des deux surfaces extérieures latérales (510c-d) de l'extrémité inférieure (510), à l'élément écarteur (540) et à la caisse principale (520) ; et
un élément de raidissement respectif (530) au moins attaché à chacune des deux surfaces extérieures latérales (510c-d) de l'extrémité inférieure (510) et à un bord supérieur (550c) de l'élément de support correspondant (550), dans laquelle les éléments de raidissement (530) sont configurés pour absorber les charges de flambage générées dans l'extrémité inférieure (510) et transmettre les efforts de flexion à la caisse principale (520) via les éléments de support respectifs (550).

**10.** Superstructure de véhicule selon la revendication 9, dans laquelle les éléments de raidissement (530) sont positionnés centrés sur les surfaces extérieures latérales respectives (510c-d) de l'extrémité inférieure (510) et en correspondance avec un axe longitudinal de l'extrémité inférieure (510).

**11.** Méthode de fabrication de la bague de sécurité anti-retournement de l'une quelconque des revendications 1 à 8, **caractérisée en ce que** la méthode comprend les étapes de :

fabrication (300A) d'une pluralité de sections profilées tubulaires en acier, ladite étape de fabrication comprenant, pour chaque section profilée tubulaire en acier :

le façonnage à froid (301) d'une bande d'une tôle d'acier formant des sections profilées en acier ayant une forme tubulaire ;
le soudage longitudinal (302) de la bande façonnée ; et
le durcissement (307) de la section profilée tubulaire en acier soudée par austénitisation et trempe ;

couplage (300B) de la pluralité de sections profilées tubulaires en acier les unes aux autres, de préférence par soudage, par leurs sections transversales formant les arches structurelles de la bague de sécurité anti-retournement.

**12.** Méthode selon la revendication 11, comprenant le cintrage (306) d'au moins de certaines sections profilées tubulaires en acier pour qu'elles satisfassent à la forme d'arche structurelle.

**13.** Méthode selon l'une quelconque des revendications 11 et 12, comprenant le dressage (309) à froid ou à chaud des sections profilées tubulaires en acier pour compenser les déformations lors du durcissement.

**14.** Méthode selon l'une quelconque des revendications 11 à 13, comprenant :

le durcissement de la bande soudée par austénitisation à une température comprise entre 840 °C et 980 °C ;
la trempe des sections profilées tubulaires en acier austénitisées dans un fluide de trempe à base d'eau à une vitesse de refroidissement supérieure à 10 °C/s ; et
le dressage à froid des sections profilées tubulaires en acier trempées.

**15.** Méthode de couplage de la bague de sécurité anti-retournement selon l'une quelconque des revendications 1 à 8 à une caisse principale d'une superstructure de véhicule, dans laquelle au moins des extrémités inférieures des arches structurelles de la bague de sécurité anti-retournement ont une section transversale sensiblement rectangulaire ou carrée définissant une surface extérieure avant, une surface extérieure arrière et deux surfaces extérieures latérales, **caractérisée en ce que** la méthode comprend :

le couplage (401) d'un élément écarteur à la surface extérieure arrière de l'extrémité inférieure ;
le couplage (402) d'un élément de raidissement respectif à chacune des deux surfaces extérieures latérales de l'extrémité inférieure ;
le couplage (403) de l'élément écarteur à la caisse principale ;
le couplage (404) d'un élément de support respectif à chacune des deux surfaces extérieures latérales de l'extrémité inférieure, à un bord inférieur de l'élément de raidissement correspondant, à l'élément écarteur et à la caisse principale.

FIG.1

FIG.2

EP 3 842 295 B1

300

MANUFACTURING THE TUBULAR STEEL PROFILE SECTIONS

300A

COUPLING TUBULAR STEEL PROFILE SECTIONS TO FORM THE ARCHES

300B

COLD SHAPING A STRIP OF STEEL SHEET — 301

LOGITUDINALLY WELDING THE SHAPED STRIP — 302

CALIBRATING THE WELDED STRIP — 303

BUNDLE OF TUBULAR SECTIONS? — 304    YES → STRAIGHT TUBE BUNDLE WELDING — 305

NO

BENDING — 306

HARDENING — 307

ANY DIMENSIONAL DEVIATION? — 308    YES → STRAIGHTENING — 309

FIG.3

COUPING A SPACER ELEMENT TO THE REAR OUTER SURFACE —401

COUPING A STIFFENING ELEMENT TO EACH ONE OF THE TWO SIDE OUTER SURFACES —402

COUPING SPACER ELEMENT TO THE MAIN BODY —403

COUPING A SUPPORTING ELEMENT TO EACH ONE OF THE TWO SIDE OUTER SURFACES, TO A LOWER EDGE OF THE STIFFENING ELEMENTS, TO THE SPACER ELEMENT AND TO THE MAIN BODY —404

# FIG.4

**FIG.5**

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019016624 A1